**Europäisches Patentamt**

**European Patent Office**

**Office européen des brevets**

(19)

(11) Veröffentlichungsnummer: **0 127 785**
**B1**

(12) # EUROPÄISCHE PATENTSCHRIFT

(45) Veröffentlichungstag der Patentschrift:
02.09.87

(21) Anmeldenummer: **84105019.8**

(22) Anmeldetag: **04.05.84**

(51) Int. Cl.⁴: **G 05 D 23/19**, A 47 J 27/62

(54) **Verfahren und Vorrichtung zum Steuern des Gar- bzw. Kochvorganges in einem Dampfdruckkochgefäss.**

(30) Priorität: **07.05.83 DE 3316799**

(43) Veröffentlichungstag der Anmeldung:
**12.12.84 Patentblatt 84/50**

(45) Bekanntmachung des Hinweises auf die Patenterteilung:
**02.09.87 Patentblatt 87/36**

(84) Benannte Vertragsstaaten:
**AT BE CH FR GB IT LI LU NL SE**

(56) Entgegenhaltungen:
**EP-A-0 023 724**
**CH-A-355 876**
**DE-A-1 679 167**
**DE-A-3 004 088**
**US-A-2 483 628**

(73) Patentinhaber: **Kurt Wolf & Co. KG,**
**Langwiesenweg 67/71, D-7547 Wildbad (DE)**

(72) Erfinder: **Andre, Wolfram, Dipl.- Ing., Eichenweg 7,**
**D-7307 Aichwald 4 (DE)**

(74) Vertreter: **Vogel, Georg, Hermann- Essig- Strasse**
**35 Postfach 105, D-7141 Schwieberdingen (DE)**

EP 0 127 785 B1

LIBER, STOCKHOLM 1987

## Beschreibung

Die Erfindung betrifft ein Verfahren zum Steuern des Gar- bzw. Kochvorganges in einem mittels eines von einer Steuerschaltung gesteuerten Heizelementes aufheizbaren und mit Wasser und dem Kochgut gefüllten Dampfdruckkochgefäß, bei der die Temperatur im bzw. am Dampfdruckkochgefäß erfaßt und über die Steuerschaltung zur Regelung der Heizleistung des Heizelementes ausgenützt wird und bei der mittels eines einstellbaren Zeitgliedes eine Gar- bzw. Kochzeit vorgegeben wird, wobei das Zeitglied erst mit dem Erreichen einer zwischen der Verdampfungstemperatur des Wassers und der vorgegebenen Gar- bzw. Kochtemperatur liegenden vorgegebenen Meßtemperatur mit der Abmessung der vorgegebenen Gar- bzw. Kochzeit beginnt ein solches Verfahren ist z. B. aus DE-A1-30 04 088 bekannt.

Aus EP-A1-0 023 724 ist eine Vorrichtung für den gleichen Zweck bekannt, bei der das Zeitglied elektrisch und mechanisch von der Steuerschaltung des Heizelementes getrennt und manuell einstellbar ist und bei der nach dem Ablauf der vorgegebenen Gar- bzw. Kochzeit von dem Zeitglied ein akustisches Signal abgegeben wird, das Ende der Gar- bzw. Kochzeit anzeigt.

Bei dieser aus EP-A1-0 023 724 bekannten Vorrichtung wird die Gar- bzw. Kochzeit als feste Größe vorgegeben, die die Zeitkonstante des gesamten Gar- bzw. Kochsystems unberücksichtigt läßt. Je nach Größe des Kochgefäßes, der Heizleistung des Heizelementes und der Menge des im Kochgefäß enthaltenen Kochgutes weist das gesamte Gar- bzw. Kochsystem unterschiedliche Aufheizphasen und Abkühlphasen auf, die sich in verschiedenen Temperatur-Zeit-Kennlinien ausdrücken. Gerade diese unterschiedlichen Zeitkonstanten des Gar- bzw. Kochsystems wird bei dieser bekannten Vorrichtung außer acht gelassen. Die über das Zeitglied vorgegebene Gar- bzw. Kochzeit kann aber durch diese Eigenschaft des Gar- bzw. Kochsystems so beeinflußt werden, daß sie zu kurz oder zu lang sein kann. In der Aufheizphase beginnt die Abmessung der Gar- bzw. Kochzeit bei Erreichen eines vorgegebenen Temperaturwertes von z. B. 80° C. Außerdem läuft das Zeitglied umso schneller, je höher die Gar- bzw. Kochtemperatur über einem Grenzwert liegt, was auch umgekehrt gilt.

Bei einer aus US-A-2 483 628 bekannten Vorrichtung für den gleichen Zweck wird beschrieben, wie die Regelung der Heizleistung der Heizelements in Abhängigkeit eines Druck- oder Temperaturfühlers im Deckel eines Dampfdruckkochgefäßes über die Steuerschaltung erfolgt.

Bei einer aus DE-A1-30 04 088 bekannten Vorrichtung für den gleichen Zweck wird ein Ist-Garparameter ermittelt, der aus der Garzeit und dem Produkt aus Garzeit und Gartemperatur gewichtet berechnet wird, und mit einem Soll-Garparameter (Kochzeit in Minuten) verglichen, wodurch z. B. eine Erhöhung der Gartemperatur zu einer Verkürzung der Gartzeit führt und umgekehrt. Das Zeitglied beginnt bei Errichen der Verdampfungstempertur von Wasser zu laufen.

In der Abkühlphase bleibt bei allen diesen bekannten Vorrichtungen nach der Abschaltung des Heizelementes das Gar- bzw. Kochsystem noch eine mehr oder weniger große Zeit auf der Gar- bzw. Kochtemperatur, so daß die Gar- bzw. Kochzeit verlängert wird. Es wurde nun gefunden. daß diese Eigenschaft des Gar- bzw. Kochsystems in der Abkühlphase mit der Eigenschaft der Aufheizphase in einer vorgegebenen Beziehung steht.

Es ist Aufgabe der Erfindung, bei einer Vorrichtung der eingangs erwähnten Art eine im Zeitglied vorgegebene Gar- bzw. Kochzeit selbsttätig so zu beeinflussen, daß die durch das unterschiedliche Gar- bzw. Kochsystem bedingten unterschiedlichen Temperatur-Zeit-Kennlinien berücksichtigt sind und unabhängig davon im Dampfdruckkochgefäß auch wirklich die vorgegebene Garzeit eingehalten wird.

Diese Aufgabe wird nach der Erfindung dadurch gelöst, daß die Zeitdauer, die vom Erreichen der Dampfphase bis zum Erreichen der Verdampfungstemperatur des Wassers im Dampfdruckkochgefäß verstreicht, gemessen wird und daß das einstellbare Zeitglied die Abschaltung des Heizelementes vor Ablauf der vorgegebenen Gar- bzw. Kochzeit um so früher einleitet, je größer diese gemessene Zeitdauer ist.

Dabei wird die Erkenntnis ausgenützt, daß die Zeitdauer, die vom Erreichen der Temperatur der Dampfphase bis zum Erreichen der Verdampfungstemperatur des Wassers im Dampfdruckkochgefäß erforderlich ist, ein Maß für die Trägheit des Gar- bzw. Kochsystems und damit auch für die Menge an Kochgut im Dampfdruckkochgefäß ist. Da außerdem die Abmessung der Gar- bzw. Kochzeit erst beim Erreichen der vorgegebenen Meßtemperatur, die über der Dampfphase liegt, einsetzt, ist der Einfluß der unterschiedlichen Aufheizphasen eliminiert.

Aufgrund der erfaßten Zeitdauer ist es möglich, eine Aussage über die Abkühlphase zu treffen und das Zeitglied so zu beeinflussen, daß es die Abschaltung des Heizelementes jeweils so weit vorzieht, daß unter Berücksichtigung der Abkühlphase tatsächlich wieder die vorgegebene Gar- bzw. Kochzeit im Dampfdruckkochgefäß eingehalten ist. Da die Zeitdauer zwischen dem Erreichen der Dampfphase und dem Erreichen der Verdampfungstemperatur des Wassers im Dampfdruckkochgefäß mit der Abkühlphase in direktem Zusammenhang steht, kann nach dem Erfassen der Zeitdauer die vorgegebene Gar- bzw. Kochzeit nach einer vorgegebenen Beziehung verändert werden. Diese Beziehung zwischen der erfaßten Zeitdauer und der Verkürzungs-Zeitspanne ist so, daß die Abschaltung der Heizung so weit vorgezogen wird, daß am Ende der verkürzten Zeit die Abkühlung gerade bis zur vorgegebenen Meßtemperatur erfolgt ist.

Es hat sich gezeigt, daß eine selbsttätige Anpassung der Gar- bzw. Kochzeit mit ausreichender Genauigkeit dadurch möglich ist, daß die vorgegebene Gar- bzw. Kochzeit um eine Verkürzungs-Zeitspanne reduziert wird, die mit der gemessen Zeitdauer linear zunimmt.

Nach einer Ausgestaltung ist vorgesehen, daß die Temperatur im bzw. am Dampfdruckkochgefäß mittels eines Temperaturfühlers mit Signalgeber überwacht wird, daß der Signalgeber über eine Übertragungseinrichtung die gemessene Temperatur kennzeichnende Signale an einen Signalempfänger überträgt und daß der Signalempfänger Steuersignale abgibt, die der Temperatur im bzw. am Dampfdruckkochgefäß proportional sind.

Die Überwachung der Temperatur-Zeit-Kennlinie auf das Erreichen der vorgegebenen Meßtemperatur ist nach einer Ausgestaltung so ausgeführt, daß die Steuersignale des Signalempfängers auf das Auftreten eines die vorgegebene Meßtemperatur kennzeichnenden Wertes überwacht werden und daß mit dem Auftreten dieses Wertes das einstellbare Zeitglied zur Einleitung der Abmessung der vorgegebenen Gar- bzw. Kochzeit angesteuert wird.

Die automatische Anpassung der vorgegebenen Gar- bzw. Kochzeit an die vorliegende Temperatur-Zeit-Kennlinie erfolgt nach einer Ausgestaltung dadurch, daß eine Zeitmeßeinrichtung vorgesehen ist, die beim Auftreten der das Erreichen der Temperatur der Dampfphase und das Erreichen der Verdampfungstemperatur des Wassers kennzeichnenden Steuersignale des Signalempfängers angesteuert wird und die Zeitdauer zwischen diesen beiden kennzeichnenden Steuersignalen ermittelt, und daß die Zeitmeßeinrichtung ein der gemessen Zeitdauer zugeordnetes Signal dem einstellbaren Zeitglied zuführt und die vorgegebene Gar- bzw. Kochzeit entsprechend verkürzt.

Die vorzeitige Abschaltung des Heizelementes erfolgt nach einer Ausgestaltung vorzugsweise dadurch, daß das einstellbare Zeitglied nach Ablauf der so verkürzten Gar- bzw. Kochzeit die Steuerschaltung des Heizelementes sperrt bzw. abschaltet, oder daß das einstellbare Zeitglied nach Ablauf der so verkürzten Gar- bzw. Kochzeit ein Schaltmittel zum Ansprechen bringt, das mit seinem Ruhekontakt den Ansteuerkreis bzw. den Stromversorgungskreis der Steuerschaltung unterbricht.

Die Erfindung wird anhand eines in den Zeichnungen dargestellten Ausführungsbeispiels näher erläutert. Es zeigt:

Fig. 1 unterschiedliche Temperatur-Zeit-Kennlinien der Aufheizphase eines Dampfdruckkochgefäßes mit unterschiedlichen Mengen an Kochgut,

Fig. 2 ein Diagramm, das den Zusammenhang zwischen der Verkürzungs-Zeitspanne und der Zeitdauer angibt, die vom Erreichen der Dampfphase bis zum Erreichen der Verdampfungstemperatur des Wassers im Dampfdruckkochgefäß verstreicht,

Fig. 3 eine Temperatur-Zeit-Kennlinie eines Gar- bzw. Kochvorganges mit einer Vorrichtung nach der Erfindung und

Fig. 4 ein Blockschaltbild für eine Vorrichtung nach der Erfindung zur selbsttätigen Anpassung einer vorgegebenen Gar- bzw. Kochzeit an unterschiedliche Temperatur-Zeit-Kennlinien.

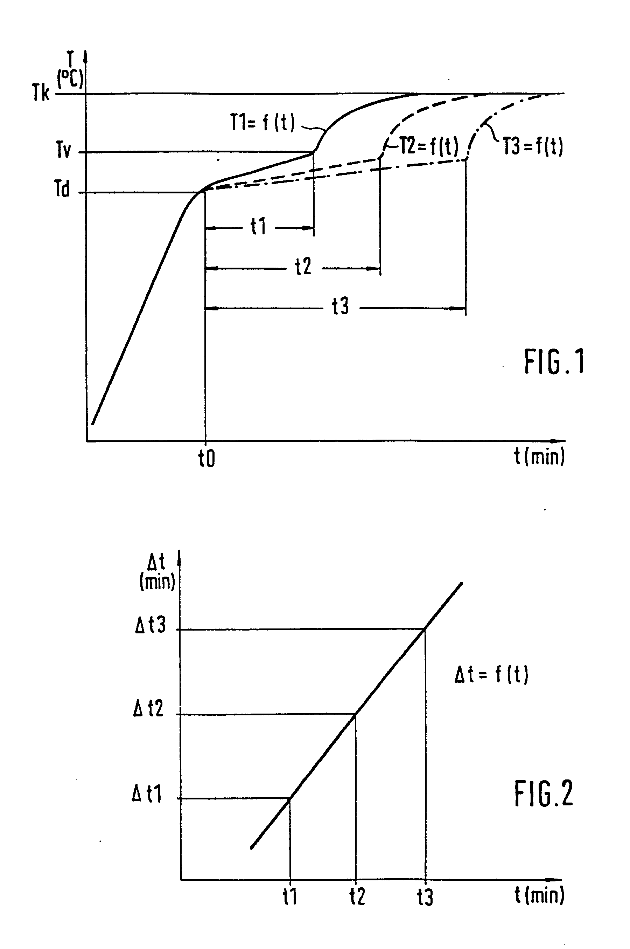

Die in Fig. 1 gezeigten Temperatur-Zeit-Kennlinien $T1 = f(t)$, $T2 = f(t)$ und $T3 = f(t)$ geben die Aufheizphase eines Gar- bzw. Kochsystems an, wobei in allen drei Fällen eine gleiche Menge Wasser in das Dampfdruckkochgefäß zur Dampfbildung eingebracht ist. Die Menge an Kochgut ist aber unterschiedlich und wird in äquivalenten Wassermengen angegeben. Die Temperatur-Zeit-Kennlinien zeigen, daß der Temperaturanstieg bis zum Erreichen der Temperatur $Td$ der Dampfphase, die etwa bei $Td = 90°C$ beginnt, unabhängig von der Menge des Kochgutes ist. Ist die Temperatur $Td$ der Dampfphase erreicht, dann dauert es verschieden lang, bis die Verdampfungstemperatur $Tv = 100°C$ des Wassers im Dampfdruckkochgefäß erreicht wird, wie die Zeitdauer $t1$, $t2$ bzw. $t3$ angibt. Ist die Verdampfungstemperatur $Tv$ erreicht, dann erfolgt der Anstieg der Temperatur auf die Gar- bzw. Kochtemperatur $Tk$ im wesentlichen wieder in gleicher Weise unabhängig von der Menge des Kochgutes. Die Zeitkonstante des Gar- bzw. Kochsystems drückt sich daher am deutlichsten in der erfaßten Zeitdauer aus, die mit zunehmender Menge an Kochgut zunimmt.

Wie Fig. 2 zeigt, ist die Zeitdauer $t1$, $t2$ bzw. $t3$ unmittelbar ein Maß für die vorzunehmende Verkürzungs-Zeitspanne $\Delta t$ und zwar ergibt sich, wie die Kennlinie $\Delta t = f(t)$ erkennen läßt, ein linearer Zusammenhang. Bei doppelter Zeitdauer $t$ ist auch die Verkürzungs-Zeitspanne $\Delta t$ entsprechend etwa doppelt so groß. Diese Beziehung kann zur selbsttätigen Anpassung der vorgegebenen Gar- bzw. Kochzeit ausgenützt werden, wie noch gezeigt wird.

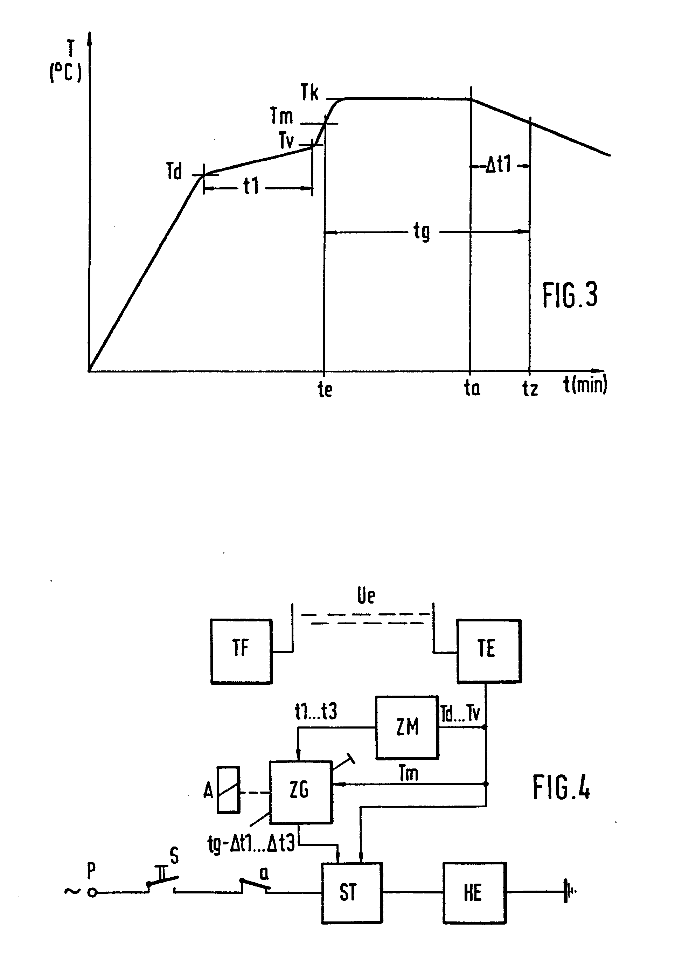

Die Fig. 3 zeigt eine Temperatur-Zeit-Kennlinie eines Gar- bzw. Kochvorganges. Die Aufheizphase ist im Zeitpunkt $te$ nach dem Erreichen der Gar- bzw. Kochtemperatur $Tk$ beendet. In der Aufheizphase wird die Zeitdauer $t1$ erfaßt, die vom Erreichen der Dampfphase bei der Temperatur $Td = 90°C$ bis zum Erreichen der Verdampfungstemperatur $Tv = 100°C$ verstreicht. Damit ist ein Maß gegeben für die Trägheit des Gar- bzw. Kochsystems und damit auch die Menge an Kochgut im Dampfdruckkochgefäß. Aus der Zeitdauer $t1$ ist abzuleiten, wie die Abkühlphase ablaufen wird. Wird zum Zeitpunkt $ta$ die Heizung abgeschaltet, dann wird über die Zeitspanne Δt1 bis zum Zeitpunkt tz im Dampfdruckkochgefäß der Abfall von der Gar- bzw. Kochtemperatur Tk zur vorgegebenen Meßtemperatur Tm linear erfolgen. Die tatsächliche Gar- bzw. Kochzeit tg reicht daher vom Zeitpunkt te bis zum Zeitpunkt tz. Wird im Zeitglied die Gar- bzw. Kochzeit tg vorgegeben, dann kann bei der Feststellung der Zeitdauer t1 in der Aufheizphase diese Vorgabe um die Verkürzungs-Zeitspanne Δ t1 gekürzt werden und der Abschaltezeitpunkt ta für die Heizung entsprechend um diese Zeitspanne vorverlegt werden. Je größer die erfaßte Zeitdauer t1, t2 bzw. t3 in der Aufheizphase ist, desto größer ist auch die Verkürzungs-Zeitspanne Δt1, Δ t2 bzw. Δ t3. Es kann also unabhängig von der Trägheit des Gar- bzw. Kochsystems, d.h. der Menge an Kochgut im Dampfdruckkochgefäß, die vorgegebene Gar- bzw. Kochzeit tg des Zeitgliedes so beeinflußt werden, daß die vorgegebene Meßtemperatur Tm im Dampfdruckkochgefäß tatsächlich auch über diese Vorgabezeit eingehalten wird.

Fig. 4 zeigt ein Blockschaltbild einer Vorrichtung, die diese Anpassung der vorgegebenen Gar- bzw. Kochzeit tg selbsttätig vornimmt. Mit dem Schalter S wird der Versorgungsstromkreis für die Steuerschaltung ST und das Heizelement HE an die Phase P des Netzwechselstromes angeschaltet. Das Heizelement HE heizt das Dampfdruckkochgefäß auf. Im bzw. am Dampfdruckkochgefäß ist ein Temperaturfühler TF mit Signalgeber angebracht, der die Temperatur erfaßt. Über die Übertragungseinrichtung Ü gibt der Signalgeber Signale an den Signalempfänger TE, welche die im Dampfdruckkochgefäß herrschende Temperatur kennzeichnen. Der Signalempfänger TE gibt ein Steuersignal ab, das der Temperatur-Zeit-Kennlinie T1 = f(t), T2 = f(t) bzw. T3 = f(t) entspricht. Das Steuersignal wird direkt der Steuerschaltung ST zugeführt, die das Heizelement HE in bekannter Weise so regelt, daß die vorgegebene Gar- bzw. Kochtemperatur Tk eingehalten wird.

Die gewünschte Gar- bzw. Kochzeit tg wird an dem einstellbaren Zeitglied ZG vorgewählt. Der Signalempfänger TE steuert mit seinem Steuersignal die Zeitmeßeinrichtung ZM an, die beim Auftreten eines der Temperatur Td entsprechenden Steuersignals mit der Messung der Zeitdauer beginnt und beim Erreichen eines der Temperatur Tv entsprechenden Steuersignals ein der Zeitdauer t1, t2 bzw. t3 entsprechendes Signal dem Zeitglied ZG zuführt. Das Zeitglied ZG wird von dem Steuersignal des Signalempfängers TE angesteuert, wenn dieses das Erreichen der vorgegebenen Meßtemperatur Tm anzeigt. Das Zeitglied ZG beginnt dann mit der Abmessung der vorgewählten Gar- bzw. Kochzeit tg. Das von der Zeitmeßeinrichtung ZM kommende Signal, das die erfaßte Zeitdauer t1, t2 bzw. t3 kennzeichnet, bewirkt im Zeitglied ZG eine Verkürzung der vorgewählten Zeit um die Verkürzungs-Zeitspanne Δt1, Δt2 bzw. Δt3, so daß die abzumessende Zeit tatsächlich nur tg-Δt1, tg-Δt2 bzw. tg-Δt3 ist. Ist die so verkürzte Gar- bzw. Kochzeit abgelaufen, dann schaltet das Zeitglied ZG die Steuerschaltung ST direkt ab oder es kann ein Schaltmittel A zum Ansprechen gebracht werden, das den Ansteuerkreis oder den Stromversorgungskreis der Steuerschaltung ST mit dem Kontakt a unterbricht. Damit ist der Abschaltezeitpunkt ta im Gar- bzw. Kochvorgang automatisch so gewählt, daß die Abkühlphase so ausgenützt wird, daß über die vorgewählte Gar- bzw. Kochzeit tg im Dampfdruckkochgefäß die vorgegebene Meßtemperatur Tm unabhängig von der Menge an Kochgut im Dampfdruckkochgefäß auch tatsächlich eingehalten wird.

**Patentansprüche**

1. Verfahren zum Steuern des Gar- bzw. Kochvorganges in einem mittels eines von einer Steuerschaltung (ST) gesteuerten Heizelementes (HE) aufheizbaren und mit Wasser und dem Kochgut gefüllten Dampfdruck kochgefäß, bei dem die Temperatur (T) im bzw. am Dampfdruckkochgefäß erfaßt und über die Steuerschaltung (ST) zur Regelung der Heizleistung des Heizelementes (HE) ausgenützt wird und bei den mittels eines einstellbaren Zeitgliedes (ZG) eine Gar- bzw. Kochzeit (tg) vorgegeben wird, wobei das einstellbare Zeitglied (ZG) erst mit dem Erreichen einer zwischen der Verdampfungstemperatur (Tv ≈ 100° C) des Wassers und der vorgegebenen Gar- bzw. Kochtemperatur (Tk) liegenden vorgegebenen Meßtemperatur (Tm) mit der Abmessung der vorgegebenen Gar- bzw. Kochzeit (tg) beginnt,
dadurch gekennzeichnet,
daß die Zeitdauer (t1, t2, t3), die vom Erreichen der Temperatur (Td ≈ 90° C) der Dampfphase bis zum Erreichen der Verdampfungstemperatur (Tv ≈ 100° C) des Wassers im Dampfdruckkochgefäß verstreicht, gemessen wird und daß das einstellbare Zeitglied (ZG) die Abschaltung (ta) des Heizelementes (HE) vor Ablauf der vorgegebenen Gar- bzw. Kochzeit (tg) um so früher einleitet, je größer diese gemesse Zeitdauer (t1, t2, t3) ist.

2. Verfahren nach Anspruch 1,
dadurch gekennzeichnet,
daß die vorgegebene Gar- bzw. Kochzeit (tg) um eine Verkürzungs-Zeitspanne (Δt1, Δt2, Δt3) reduziert wird, die mit der gemessen Zeitdauer (t1, t2, t3) linear zunimmt.

3. Verfahren nach Anspruch 1 oder 2,
dadurch gekennzeichnet,
daß die Temperatur (T) im bzw. am Dampfdruckkochgefäß mittels eines Temperaturfühlers (TF) mit Signalgeber überwacht wird, daß der Signalgeber über eine Übertragungseinrichtung (Ue) die gemessene Temperatur (T) kennzeichnende Signale an einen Signalempfänger (TE) überträgt und

daß der Signalempfänger (TE) Steuersignale abgibt, die der Temperatur (T) im bzw. am Dampfdruckkochgefäß proportional sind.

4. Verfahren nach Anspruch 3,
dadurch gekennzeichnet,
daß die Steuersignale des Signalempfängers (TE) auf das Auftreten eines die vorgegebene Meßtemperatur (Tm) kennzeichnenden Wertes überwacht werden und

daß mit dem Auftreten dieses Wertes das einstellbare Zeitglied (ZG) zur Einleitung der Abmessung der vorgegebenen Gar- bzw. Kochzeit (tg) angesteuert wird.

5. Verfahren nach einem der Ansprüche 1 bis 4,
dadurch gekennzeichnet,
daß eine Zeitmeßeinrichtung (ZM) vorgesehen ist, die beim Auftreten der das Erreichen der Temperatur (Td) der Dampfphase und das Erreichen der Verdampfungstemperatur (Tv) des Wassers kennzeichnenden Steuersignale des Signalempfängers (TE) angesteuert wird und die Zeitdauer (t1, t2, t3) zwischen diesen beiden kennzeichnenden Steuersignalen gemessen, und

daß die Zeitmeßeinrichtung (ZM) ein der gemessenen Zeitdauer (t1, t2, t3) zugeordnetes Signal dem einstellbaren Zeitglied (ZG) zuführt und die vorgegebene Gar- bzw. Kochzeit (tg) um die Verkürzungs-Zeitspanne (Δt1, Δt2 bzw. Δt3) verkürzt.

6. Verfahren nach Anspruch 5,
dadurch gekennzeichnet,
daß das einstellbare Zeitglied (ZG) nach Ablauf der so verkürzten Gar- bzw. Kochzeit (tg-Δt1 bzw. tg-Δt2 bzw. tg- Δt3) die Steuerschaltung (ST) des Heizelementes (HE) sperrt bzw. abschaltet.

7. Verfahren nach Anspruch 5,
dadurch gekennzeichnet,
daß das einstellbare Zeitglied (ZG) nach Ablauf der so verkürzten Gar- bzw. Kochzeit (tg- Δt1 bzw. tg-Δt2 bzw. tg-Δt3) ein Schaltmittel (A) zum Ansprechen bringt, das mit seinem Ruhekontakt (a) den Ansteuerkreis bzw. den Stromversorgungskreis der Steuerschaltung (ST) unterbricht.

**Claims**

1. Method of controlling the simmering or cooking process in a pressure-cooking vessel filled with water and food to be cooked, which can be heated up by means of a heating element (HE) controlled by a control circuit (ST), whereby the temperature (T) in or on the pressure cooker is measured and used for regulating the heating power of the heating element (HE) via the control circuit (ST), and whereby a simmering or cooking time (tg) is set by means of an adjustable timing element (ZG), whereby the adjustable timing element (ZG) only begins to measure the set simmering or cooking time (tg) when a predetermined measuring temperature (Tm) that lies between the vaporizing temperature (Tv ≈ 100°C) of the water and the set simmering or cooking temperature (Tk) has been reached,
characterized by the fact that the time (t1, t2, t3) is measured that elapses between the reaching of the temperature of the steam phase (Td ≈ 90°C) and the reaching of the vaporizing temperature (Tv ≈ 100°C) of the water in the pressure-cooking vessel, and

that the greater this measured time (t1, t2, t3) is, the earlier the adjustable timing element (ZG) causes the switching off (ta) of the heating element (HE) before the predetermined simmering or cooking time (tg) has elapsed.

2. Method according to claim 1,
characterized by the fact,
that the predetermined simmering or cooking time (tg) is reduced by a shortening time (Δt1, Δt2, Δt3) that shows a linear increase with the time measured (t1, t2, t3).

3. Method according to claim 1 or 2,
characterized by the fact,
that the temperature (T) in or on the pressure-cooking vessel is monitored by means of a temperature sensor (TF) with a transducer,

that the transducer transmits the signals marking the measured temperature (T) via a transmitting facility (Ue) to a receiver (TE), and

that the receiver (TE) emits control signals that are proportional to the temperature (T) in or on the pressure-cooking vessel.

4. Method according to claim 3,
characterized by the fact,
that the control signals of the receiver (TE) are monitored to check the occurrence of a value marking the predetermined measuring temperature (Tm), and,

that when this value occurs, the adjustable timing element (ZG) is triggered so as to measure the predetermined simmering or cooking time (tg).

5. Method according to one of the claims 1 to 4,
characterized by the fact,
that a time-measuring device (ZM) is provided, which is triggered when the control signals of the receiver (TE) occur that mark the reaching of the temperature (Td) of the steam phase and the reaching of the vaporizing temperature (Tv) of the water, and which measures the time (t1, t2, t3) between these two characteristic control signals, and,

that the time-measuring device (ZM) feeds a signal allocated to the measured time (t1, t2, t3) to the adjustable timing element (ZG) and shortens the predetermined simmering or cooking time (tg) by the shortening period (Δt1, Δt2 or Δt3).

6. Method according to claim 5,
characterized by the fact,
that the adjustable timing element (ZG) blocks or switches off the control circuit (ST) of the heating element (HE) after the simmering or cooking time shortened in this way (tg-Δt1 or tg-Δt2 oder tg-Δt3) has elapsed.

7. Method according to claim 5,
characterized by the fact

that after the simmering or cooking time shortened in this way (tg-Δt1 or tg-Δt2 or tg-Δt3) has elapsed the adjustable timing element (ZG) causes a switching element (A) to respond that breaks the triggering circuit of the power supply circuit of the control circuit (ST) by means of its break contact.

**Revendications**

1. Procédé pour commander le processus de cuisson (cuisson à point ou par ébullition) dans un autocuiseur pouvant être chauffé par l'intermédiaire d'un élément chauffant (HE) commandé par une commutation de commande (ST) et qui est empli d'eau et de la matière à cuire, procédé dans lequel la température (T) régnant dans ou sur l'autocuiseur est décelée et est utilisée par la commutation de commande (ST) pour réguler la puissance de chauffage de l'élément chauffant (HE) et dans lequel un temps (tg) de cuisson est prédéterminé au moyen d'un relais temporisateur (ZG) réglable, dans lequel le relais temporisateur (ZG) réglable ne commence à mesurer le temps (tg) prédéterminé de cuisson que lorsqu'est atteinte une température (TM) de mesure prédéterminée comprise entre la température (Tv), valant approximativement 100°C, d'évaporation de l'eau et la température (Tk) prédéterminée de cuisson, procédé caractérisé en ce qu'on mesure l'intervalle de temps (t1, t2, t3) compris entre le moment où la température (Td approximativement égale à 90°C) de la phase de début de vapeur est atteinte jusqu'à ce que soit atteinte la température (Tv), valant approximativement 100°C, de pleine évaporation de l'eau dans l'autocuiseur, et en ce que le relais temporisateur (ZG) réglable provoque la coupure (ta) de l'alimentation de l'élément chauffant (HE) de façon d'autant plus précoce avant l'écoulement du temps (tg) prédéterminé de cuisson que l'intervalle de temps (ta, t2, t3) mesuré est plus grand.

2. Procédé selon la revendication 1, caractérisé en ce que le temps (tg) prédéterminé de cuisson est diminué d'un intervalle (Δt1, Δt2, Δt3) de raccourcissement de temps, qui augmente linéairement avec l'intervalle de temps (t1, t2, t3) mesuré.

3. Procédé selon la revendication 1 ou 2, caractérisé en ce que la température (T) régnant dans ou sur l'autocuiseur est surveillée à l'aide d'un détecteur (TF) de température comportant un émetteur de signaux, en ce que l'émetteur de signaux transmet par une installation (Ue) de transmission les signaux caractérisant la température (T) mesurée à un récepteur (TE) de signaux, et en ce que le récepteur (TE) de signaux émet des signaux de commande qui sont proportionnels à la température (T) régnant dans ou sur l'autocuiseur.

4. Procédé selon la revendication 3, caractérisé en ce que les signaux de commande provenant du récepteur (TE) de signaux sont surveillés pour noter l'apparition d'une valeur caractérisant la température (Tm) de mesure prédéterminée et en ce que, lorsque cette valeur apparaît, le relais temporisateur (ZG) réglable est excité pour qu'il commence à mesurer le temps (tg) prédéterminé de cuisson.

5. Procédé selon l'une des revendications 1 à 4, caractérisé en ce que l'on prévoit un dispositif (ZM) de mesure du temps qui, lorsque le récepteur (TE) de signaux reçoit des signaux de commande indiquant que la température (Td) de la phase de début de vaqeur est atteinte et que la température (Tv) de pleine évaporation de l'eau est atteinte, est commandé pour que soit mesuré l'intervalle de temps (t1, t2, t3) séparant ces deux signaux caractéristiques de commande, et en ce que le dispositif (ZM) de mesure de temps achemine au relais temporisateur (ZG) réglable un signal associé à l'intervalle de temps (t1, t2, t3) mesuré et raccourcit, de l'intervalle (Δt1, Δt2, ou Δt3) de raccourcissement de temps, le temps (tg) prédéterminé de cuisson.

6. Procédé selon la revendication 5, caractérisé en ce qu'après écoulement du temps de cuisson ainsi raccourci (tg-Δt1 ou tg-Δt2 ou tg-Δt3), le relais temporisateur (ZG) réglable bloque ou coupe la commutation (ST) de commande de l'élément chauffant (HE).

7. Procédé selon la revendication 5, caractérisé en ce que, après écoulement du temps du cuisson ainsi raccourci (tg-Δt1 ou tg-Δt2 ou tg-Δt3), le relais temporisateur (ZG) réglable fait agir un moyen (A) de commutation qui, à l'aide de son contact (a) de repos, coupe le circuit de commande ou le circuit d'alimentation en courant de la commutation (ST) de commande.

FIG.1

FIG.2

FIG.3

FIG.4